(19) Europäisches Patentamt

European Patent Office

Office européen des brevets

(11) Veröffentlichungsnummer: **0 419 713 A1**

## (12) EUROPÄISCHE PATENTANMELDUNG

(21) Anmeldenummer: **89117972.3**

(22) Anmeldetag: **28.09.89**

(51) Int. Cl.5: **H04L 12/40**

(43) Veröffentlichungstag der Anmeldung:
**03.04.91 Patentblatt 91/14**

(84) Benannte Vertragsstaaten:
**CH DE FR GB IT LI SE**

(71) Anmelder: **Siemens Aktiengesellschaft**
**Wittelsbacherplatz 2**
**W-8000 München 2(DE)**

(72) Erfinder: **Flach, Werner, Dipl.-Ing.**
**Pfistermeisterstrasse 47**
**W-8450 Amberg(DE)**

(54) Schnittstellenbaustein für eine Busschnittstelle.

(57) Zum Anschluß eines Teilnehmers über eine Bus-schnittstelle an einen Zweidraht-Linien-Bus (3) wur-den bisher die hierzu erforderlichen Anschlußmittel in die Entflechtung von Baugruppen einbezogen. Er-findungsgemäß werden anwenderfreundliche An-schlußmittel geschaffen, die eine einfache Anwen-dung an die Busschnittstelle ermöglichen, wobei ver-schiedene Anforderungen an die Busphysik für sich realsierbar sind. Dies wird durch einen Schnittstel-lenbaustein erreicht, der als gesonderte Einheit eine den jeweiligen Anforderungen an die Busphysik angepaßte, elektrische Schaltung (14) aufweist. Bei-spielsweise durch eine einfache Umverdrahtung oder Austausch dieser Einheit ist es möglich, vielen An-wenderwünschen gerecht zu werden.

FIG 1

EP 0 419 713 A1

## SCHNITTSTELLENBAUSTEIN FÜR EINE BUSSCHNITTSTELLE

Die Erfindung betrifft ein Anschlußmittel zum Anschluß eines Teilnehmers eines Kommunikationssystems, z.B. einer speicherprogrammierbaren Steuerung, an einen Bus, wobei der Teilnehmer über eine Busschnittstelle verfügt, die zwei Schnittstellenanschlüsse zur Übergabe eines Differenzsignals (RS 485 Schnittstelle, EIA-Norm RS 485, Elektronik 19, 19.09.1986, S. 146-154) aufweist und die mit einem dritten Schnittstellenanschluß zur Spannungsversorgung und mit einem vierten Schnittstellenanschluß zur Masseverbindung versehen ist.

Anschlußmittel der obengenannten Art wurden bisher in die Schaltung eines Teilnehmers integriert. Z.B. werden bei Baugruppen die Anschlußmittel mit in die Entflechtung einbezogen. Die Verbindung der Anschlußmittel mit dem Bus ist hier recht umständlich und außerdem die Aufnahme der Anschlußmittel unter Umständen unzweckmäßig oder z.B. aus Platzmangel überhaupt nicht möglich. Eine Vereinheitlichung von Anschlußmitteln mit einer einfachen Anbindung an eine Standard-Schnittstelle obengenannter Art, wobei die Anschlußmittel außerdem auch unterschiedlichen Anforderungen an Busphysiken genügen, ist wünschenswert im Interesse der Anwender. Daher liegt der Erfindung die Aufgabe zugrunde, anwenderfreundliche Anschlußmittel zu schaffen, die eine einfache Anbindung an eine normierte Busschnittstelle obengenannter Art ermöglichen, wobei verschiedene Anforderungen an die Busphysik für sich realisierbar sind.

Diese Aufgabe wird durch einen Schnittstellenbaustein mit den Merkmalen nach Anspruch 1 gelöst. Hierdurch ist es möglich, beispielsweise durch einfache Umverdrahtung oder Austausch der Einheit beliebig vielen Anwenderwünschen gerecht zu werden.

Es erweist sich als vorteilhaft, wenn der Bus als Zweidraht-Linien-Bus ausgeführt ist und die elektrische Schaltung eine außerhalb der als Gehäuse ausgeführten Einheit liegende Masseanschlußklemme, vier Anschlüsse zum Anschluß des durch ein geschirmtes Kabel realisierten Zweidraht-Linien-Busses aufweist und mit ersten Mitteln zur Einstellung der Ruhelage des Zweidraht-Linien-Busses und mit zweiten Mitteln zum Anschluß des Zweidraht-Linien-Busses sowie mit einem mehradrigen Kabel versehen ist, wobei der erste und der zweite der vier Anschlüsse einerseits und der dritte und der vierte der vier Anschlüsse andererseits elektrisch miteinander verbunden sind und eine elektrische Verbindung zwischen dem ersten der vier Anschlüsse und einer ersten Ader des mehradrigen Kabels sowie dem dritten aer vier Anschlüsse und einer zweiten Ader des mehradrigen Kabels besteht. Hierdurch ist nämlich ein anwenderfreundlicher Schnittstellenbaustein geschaffen, der eine einfache Anbinddung an eine normierte Busschnittstelle ermöglicht und eine gute Entstörung sowie einen unverlierbaren Abschluß des Zweidraht-Linien-Busses bietet. Weiterhin läßt sich bei diesem Schnittstellenbaustein auf einfache Weise eine zusätzliche normierte Schnittstelle für einen weiteren Teilnehmer zur Verfügung stellen. Eine andere vorteilhafte Ausführungsform ist gegeben, wenn die elektrische Schaltung der Einheit mindestens einen ersten und einen zweiten Treiberbaustein aufweist, die jeweils mit einem Sender und einem Empfänger versehen sind, an die jeweils über einen Ein- und einen Ausgang ein als externe Leitung ausgeführter Bus von außen angeschlossen ist und wenn in der Schaltung eine Elektronik mit einem elektronischen Schalter vorgesehen ist, mit der signalabhängig ein Signal am Eingang des Empfängers durch Schließen des elektronischen Schalters an den Sender des nachfolgenden Treiberbausteins zur Weiterleitung durchschaltbar ist, wobei das am Ausgang des Senders anstehende Signal gegenüber dem am Eingang des Empfängers anstehenden Signal aufgefrischt ist. Mit dieser Ausführungsform lassen sich nicht nur die Teilnehmerzahlen steigern, sondern auch lange Stichleitungen realisieren. Die hier gegebene Bus-Erweiterung erlaubt auch, Bussegmente in Art einer Baumstruktur aufzubauen. Mit diesem Schnittstellenbaustein lassen sich 31 Teilnehmer bei einer Leitungslänge von ungefähr 1200 m mit einer Datenübertragungsgeschwindigkeit bis zu 100 Kilobaud versorgen. Eine weitere für andere Bedingungen zweckmäßige Ausführungsform ist gegeben, wenn der Bus als Zweidraht-Linien-Bus ausgeführt ist, auf dem modulierte erste Signale übertragen werden, wobei der Schnittstellenbaustein ausgehend von seiner Anschlußseite zum Zweidraht-Linien-Bus hin einen Transformator und dazu in Reihe eine Parallelschaltung aus einem Empfänger und einem Sender sowie einem ersten Differenzverstärker aufweist, der mit einem zweiten Differenzverstärker zusammenarbeitet und weiterhin im Schnittstellenbaustein erste Mittel vorgesehen sind, die abhängig vom Pegel der ersten Signale einem zur Modulation und Demodulation der ersten Signale verwendeten anwenderspezifischen Schaltkreis ein Sperrsignal senden, wobei der anwenderspezifische Schaltkreis dem Sender ein Freigabesignal zur Freigabe der zu sendenden ersten Signale sendet. Diese Ausführungsform des Schnittstellenbausteins bietet eine galvanische Trennung und ermöglicht eine Kommunikation über lange Leitungslängen bei niedrigen Datenübertragungsgeschwindigkeiten. Frischt die elektrische Schaltung vom Bus empfangene Übertragungssignale, welche mit konstanter Frequenz wiederkehrende Flanken haben, auf und sendet sie nach Auffrischung an weitere Teilnehmer des Busses, so ist hiermit ein Schnittstellenbaustein ausgeführt, der neben hohen Datenübertragungsgeschwindigkeit eine hohe Teilnehmeranzahl und eine große Gesamtbuslänge ermöglicht. Wenn der Bus als Vierdrahtsystem ausgeführt ist, so lassen sich hierbei die Übertragungssignale ohne Umschaltung weiterleiten. Als vorteilhaft erweist es sich weiterhin, wenn erste und zweite Mittel zur Auffrischung der Amplitude und der Phase der Übertragungssignale vorgesehen sind, da hierdurch lange Übertragungswege der Übertragungssignale ermöglicht werden. Ist für jede Übertragungsrichtung des Übertragungssignals in der Schaltung jeweils eine Reihenschaltung aus einem Empfänger und einem verstärkenden Sender vorgesehen, so stellt dies eine einfache Ausführung der ersten Mittel dar. Weist die elektrische Schaltung zweite Mittel auf, mit denen die Pulse des Übertragungs signals in der Phase aufgefrischt werden, bevor diese an den Sender weitergeleitet werden, so wird hiermit eine einfache Phasenkorrektur der verzerrten Pulse erreicht, die große Gesamtbuslängen zuläßt.

In der Zeichnung sind mehrere Ausführungsbeispiele dargestellt, die im folgenden näher erläutert werden.

Es zeigen:

FIG 1 den prinzipiellen Aufbau und die Anordnung eines Schnittstellenbausteins,

FIG 2 eine normierte Busschnittstelle und einen daran angepaßten Schnittstellenbaustein mit einem Busabschluß,

FIG 3 die elektrische Schaltung der Schnittstellenbausteins nach FIG 2,

FIG 4 die konstruktive Gestaltung des Schnittstellenbausteins nach FIG 2 und FIG 3,

FIG 5 den Anschluß von Teilnehmern an ein neu eröffnetes Bus-Segment mit einem weiteren Schnittstellenbaustein

FIG 6 den Schnittstellenbaustein nach FIG 5

FIG 7 einen Schnittstellenbaustein zur Ankopplung modulierter Signale,

FIG 8 einen Schnittstellenbaustein für hohe Datenübertragungsgeschwindigkeit, hohe Teilnehmeranzahl und große Gesamtbuslänge.

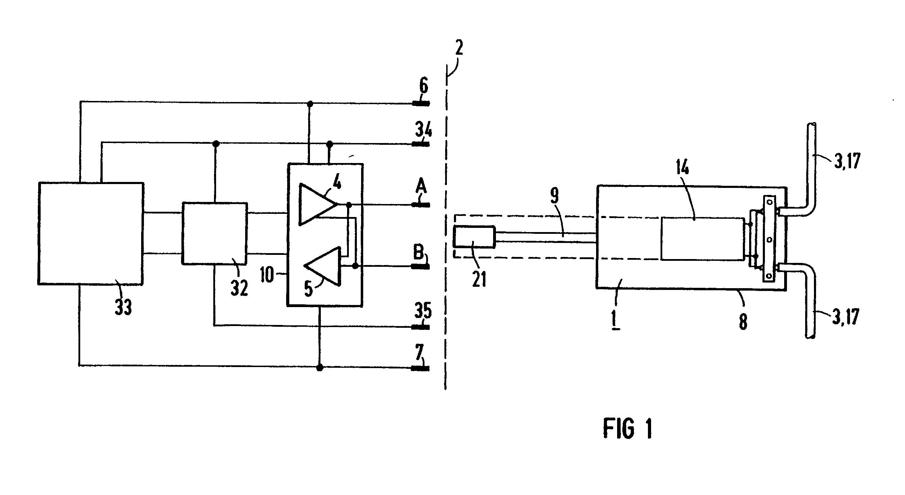

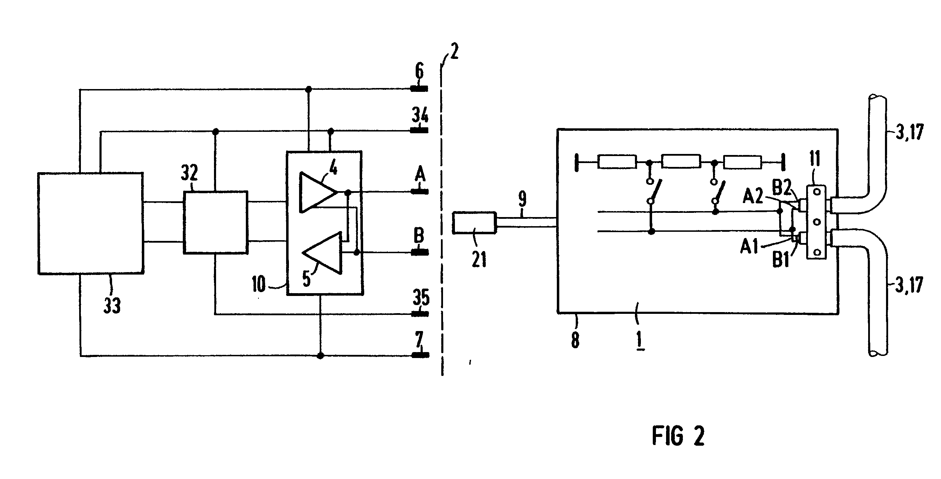

In FIG 1 und 2 ist eine normierte Busschnittstelle 2 eines Teilnehmers in einem Kommunikationssystem und ein an diese normierte Busschnittstelle 2 angepaßter Schnittstellenbaustein 1 dargestellt. Der Teilnehmer ist hier durch einen Mikroprozessor 33 angedeutet; der Signalaustausch zwischen der normierten Busschnittstelle 2 und einem Zweidraht-Linien-Bus 3 geschieht mit einem Differenzsignal über zwei Schnittstellenanschlüsse A und B, die zum Senden und Empfangen des Differenzsignals an einen Verstärkerbaustein 10 (Treiber) mit einem Sender 4 und einem Emnpfänger 5 angeschlossen sind. Daneben enthält die Busschnittstelle 2 einen dritten Schnittstellenanschluß 6 zur Spannungsversorgung, die vom Teilnehmer zur Verfügung gestellt wird und den Verstärkerbaustein 10 versorgt. Außerdem steht der Verstärkerbaustein 10 mit einem vierten Schnittstellenanschluß 7, an den die Masse des Teilnehmers herangeführt ist, in Verbindung.

Bei der Verwendung der MODEM-Technik, wie bei der vorliegenden Ausführungsform, ist ein entsprechender anwenderspezifischer Schaltkreis 32 für die MODEM-Technik vorgesehen, über den die Signale zwischen dem Sender 4 und dem Empfänger 5 einerseits und dem Mikroprozessor 33 andererseits übertragen werden. Als Zusatz erfordert die MODEM-Technik einen weiteren Schnittstellenanschluß 34 zur Übertragung des RTS (Request to Send)-Signals und einen Schnittstellenanschluß 35 für die Silence-Erkennung. Beide Schnittstellenanschlüsse 34, 35 sind an den anwenderspezifischen Schaltkreis 32 angeschlossen und stehen mit dem Mikroprozessor 33 elektrisch in Verbindung. Es gibt jedoch auch Anwendungsfälle ohne MODEM-Technik, bei denen die entsprechenden Anschlüsse zu den Schnittstellenanschlüssen 34, 35 am Schnittstellenbaustein 1 verzichtbar sind. Der Schnittstellenbaustein 1 weist ein Gehäuse auf, an dem z.B. einerseits ein Zweidraht-Linien-Bus 3, hier durch ein geschirmtes Kabel 17 verwirklicht, und andererseits ein mehradriges Kabel 9 mit einem mehrpoligen Anschlußstecker 21 angeschlossen ist. Zum Anschluß des Schnittstellenbausteins 1 an den Zweidraht-Linien-Bus 3 wird das geschirmte Kabel 17 aufgetrennt. In dem Gehäuse 8 nach FIG 1 befindet sich eine den Anforderungen an die gewünschte Busphysik angepaßte elektrische Schaltung 14. Zu dieser gehört beim speziellen Schnittstellenbaustein 1 nach FIG 2, wie angedeutet, z.B. ein ohmscher Teiler.

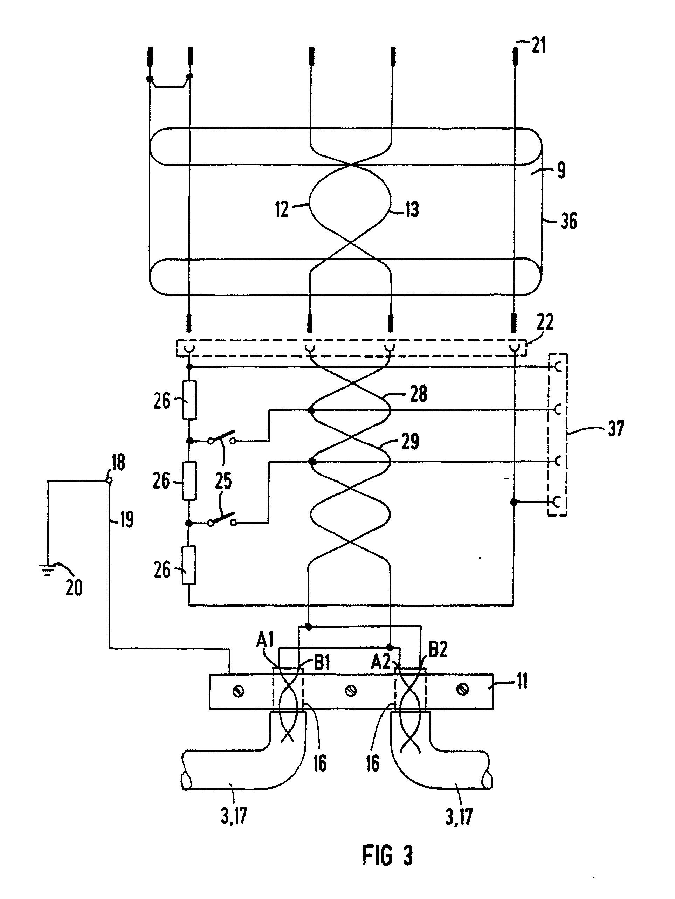

FIG 3 zeigt Einzelheiten der elektrischen Schaltung des Schnittstellenbausteins 1 nach FIG 2. Der Schirm 16 der beiden nach der Auftrennung entstandenen Enden des geschirmten Kabels 17 ist an einer Masseanschlußklemme 11 angeklemmt, welche mit der Ortserde 20 durch einen Massivleiter 19 verbunden ist. Besonders hervorzuheben ist hierbei, daß die Masseanschlußklemme 11 außen am Gehäuse 8 liegt und hierdurch eine einfache Schirmung des Kabels 17 gewährleistet ist. Vier Anschlüsse A1, A2, B1 und B2 stehen zum Anschluß der Signalleitungen an den beiden Enden des geschirmten Kabels 17 zur Verfügung, wobei jeweils zwei Anschlüsse A1, A2 einerseits und B1, B2 andererseits elektrisch miteinander verbunden sind. Die vier Anschlüsse A1, A2, B1, B2 sind über zwei Leitungen 28 und 29 mit zwei Anschlußeinheiten 22, 37 elektrische verbunden, an die jeweils über das hier nur einmal dargestellte mehradrige Kabel 9 ein Teilnehmer anschließbar ist. Das mehradrige Kabel 9 weist zu Entstörzwecken einen Schirm 36 auf. Zwei Adern 12, 13 des mehradrigen Kabels 9 sind über den mehrpoligen Anschlußstecker 21 an die Schnittstellenanschlüsse A und B angeschlossen. Zwischen zwei Anschlüssen der Anschlußeinheit 22 ist ein ohmscher Teiler 26, bestehend aus drei ohmschen Widerständen, geschaltet, wobei an jeweils einen Verbindungspunkt zwischen zwei Widerständen ein Schalter 25 liegt. Die anderen Zuleitungen der Schalter 25 sind jeweils mit einer der beiden Leitungen 28 und 29 verbunden. Auf die Anschlußeinheit 22 ist das mehradrige Kabel 9 mit seinen beiden Adern 12 und 13, über die das eigentliche Signal geführt wird, steckbar. Das mehradrige Kabel 9 schafft ebenfalls eine Verbindung zwischen dem Schnittstellenanschluß 6 mit der Spannungsversorgung, den Schnittstellenanschluß 7 zur Masseanbindung und der Teilerschaltung 26. Mit der Teilerschaltung 26 wird einerseits die Vorverzerrung des Zweidraht-Linien-Busses 3, d.h. seine Ruhelage hergestellt und andererseits der Abschluß des Zweidraht-Linien-Busses 3 erreicht, der hier zudem im Schnittstellenbaustein 1 unverlierbar untergebracht ist.

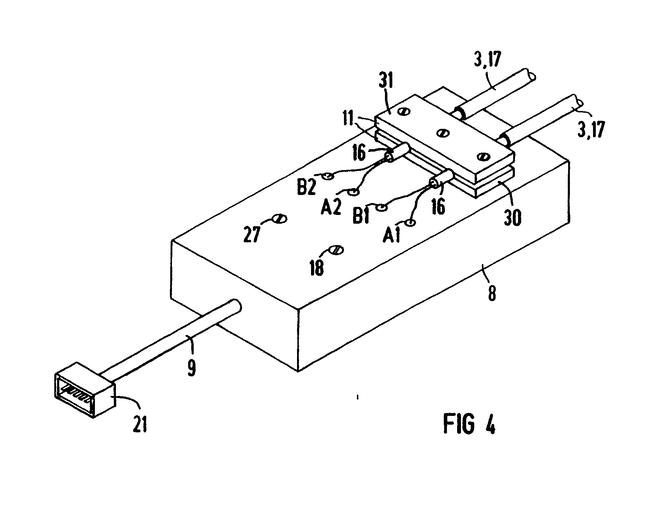

FIG 4 zeigt die konstruktive Gestaltung des Schnittstellenbausteins 1. Er besteht aus einem Gehäuse 8, auf dessen Oberseite eine Masseanschlußklemme 11, bestehend aus einer Metallunterlage 30 und einer Schelle 31, angebracht ist, sowie vier benachbart angeordnete Anschlüsse A1, B1, A2, B2 vorgesehen sind. Weiterhin sind ein Anschluß 18, der über einen hier nicht dargestellten Massiyleiter 19 mit der Masseanschlußklemme 11 verbunden ist, und eine Schraube 27 vorgesehen. Mit einem Schraubendreher können die beiden Schalter 25 über die Schraube 27 betätigt werden, um somit die Teilerschaltung 26 ein- oder auszuschalten. Hierdurch werden der Abschluß und die Ruhelage des Zweidraht-Linien-Busses 3 bewirkt. Zum Schnittstellenbaustein 1 gehört außerdem das mehradrige Kabel 9 mit dem mehrpoligen Anschlußstecker 21 an dem einen Ende zum Anschluß an die normierte Busschnittstelle 2 und mit einem hier nicht dargestellten, mehrpoligen Anschlußstecker am anderen Ende, über den die elektrische Verbindung mit der Anschlußeinheit 22 möglich ist. Die massive Ausbildung der Masseanschlußklemme 11 ermöglicht eine gute Masseanbindung des geschirmten Kabels 17. Über den Anschluß 18 kann ein Massekabel zur Erdung herangeführt werden, sofern beispielsweise eine Ortserde 20, die direkt mit dem Gehäuse 8 in Verbindung steht, nicht vorhanden ist. Das Gehäuse 8 ist über einen hier nicht dargestellten, rückseitigen Schnappmechanismus zur Halterung auf eine Schiene aufschnappbar, wobei eine mit der Masseanschlußklemme 11 in Verbindung stehende Massefeder die über die Schiene herangeführte Ortserde kontaktiert.

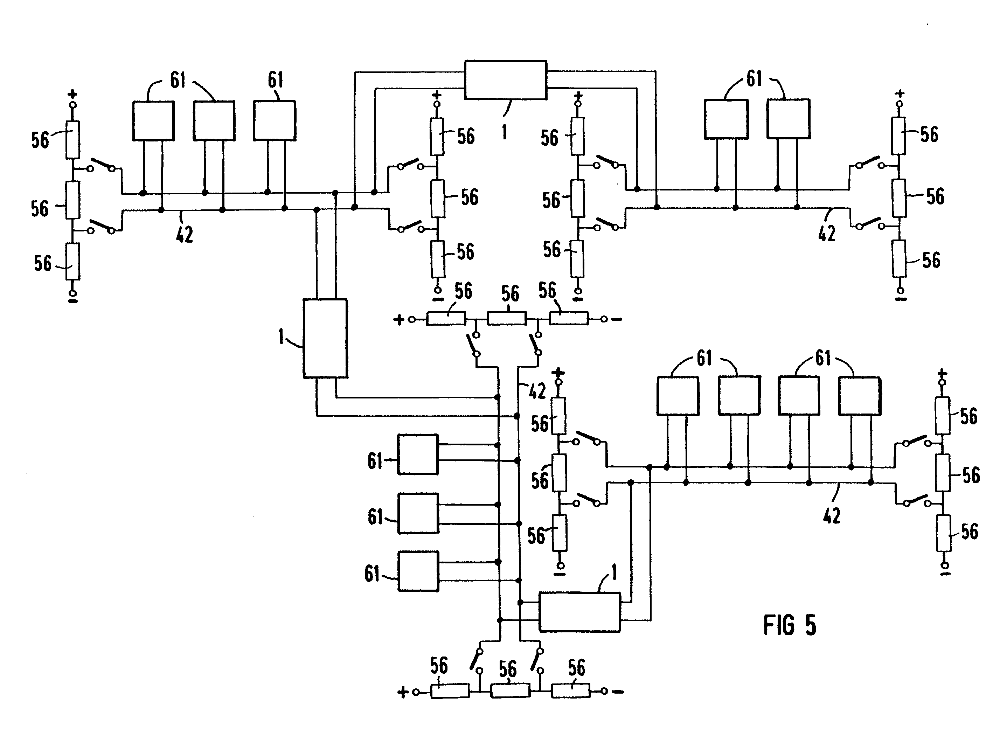

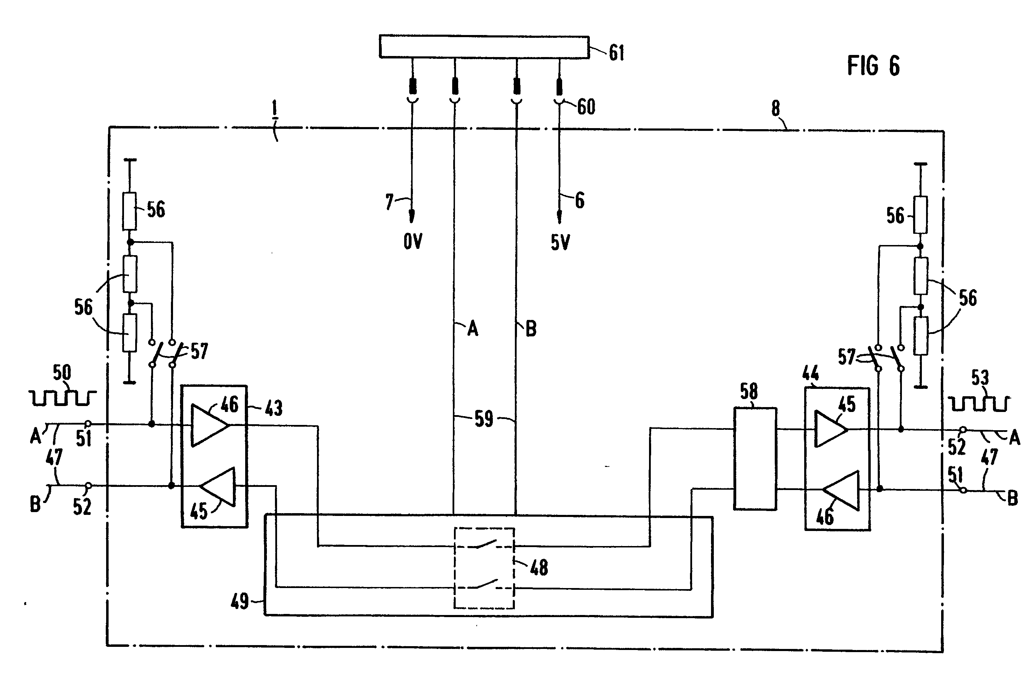

FIG 5 zeigt Bussegmente 42 von 1 km Leitungslänge mit Abschlußwiderständen 56 an den Enden und über die Leitung verteilt angeschlossenen Teilnehmern 61. Mit einem Schnittstellenbaustein 1 kann ein neues Bussegment 42 aufgemacht werden, wobei eine Entkopplung zwischen beiden Bussegmenten 42 stattfindet. Durch Optokoppler 58 (siehe FIG 6) kann auch eine galvanische Trennung der Bussegmente 42 erreicht werden. Bei dem Kommunikations-Bus-System handelt es sich um einen Zweidraht-Linienbus, für den zur Signalübertragung für beide Richtungen eine Durchschaltmöglichkeit vorgesehen werden muß. An das neu eröffnete Bussegment 42 kann ein abgesetztes Programmiergerät als Teilnehmer 61, das z.B. in der Warte eines Bergwerks installiert ist, angeschlossen werden. Auch der Anschluß weiterer Empfänger, d.h. Teilnehmer 61 an das neu aufgemachte Bussegment 42 ist möglich.

FIG 5 zeigt, daß auch eine Buserweiterung des neu eröffneten Bussegments 42 um weitere Bussegmente 42 möglich ist. Somit besteht die Möglichkeit, eine Baumstruktur zu schaffen, die für praktische Anwendungsfälle eine hohe Flexibilität und damit großen Nutzen mit sich bringt.

FIG 6 zeigt den Schnittstellenbaustein 1, der aus einem Gehäuse 8 besteht, in welchem zwei Treiberbausteine 43, 44 über eine Elektronik 49 miteinander verbunden sind. Die beiden Treiberbausteine 43, 44 umfassen jeweils einen Sender 45 und einen Empfänger 46, an die externe, d.h. außerhalb des Gehäuses 8 geführte Leitungen 47 angeschlossen sind. Die Elektronik 49 im Gehäuse 8 bewertet die empfangenen Signale 50 und schaltet den Signalfluß entsprechend durch. Der Schnittstellenbaustein 1 besitzt außerdem Abschlußwiderstände 56, die über Schalter 57 an die externen Bus-Anschlüsse 51, 52 gelegt werden können.

Durch die Abschlußwiderstände 56 sind die Leitungen 47 im Ruhezustand bzw. hochfrequent abgeschlossen, d.h. im Zustand ohne Signalübertragung auf den Pegel 0 bzw. 1 gesetzt. Der Empfang eines Telegrammes, das mit einem Startbit beginnt und anschliessend die Daten, das Paritybit und das Stopsignal enthält (Asynchrones UART-Protokoll), ist auf beiden Seiten des Schnittstellenbausteines 1 durch die Empfänger 46 des jeweiligen Treiberbausteines 43 oder 44 möglich. Die Elektronik 49 überwacht auf beiden Seiten, wann die Startflanke des Telegramm-Bytes kommt, die als Umschaltkriterium zur Umschaltung eines elektronischen Schalters 48 in der Elektronik 49 verwendet wird. Es erfolgt in diesem Fall eine Umschaltung von dem einen Empfänger 46 am Eingang 51 des Schnittstellenbausteines 1 über den elektronischen Schalter 48 auf den am Ausgang 52 des Schnittstellenbausteines 1 befindlichen Sender 45. Die Überwachung der Start flanke auf beiden Seiten kann beispielsweise mittels eines Flip-Flops realisiert werden, welches anspricht, sobald die Startflanke des Telegramm-Bytes nach Low geht. Digitale Filter sorgen dafür, daß Störimpulse nicht fälschlich weitergeleitet werden.

Bei der vorliegenden Ausführungsform werden Differenzempfänger 46 und Differenzsender 45 verwendet, die beide aktiviert werden können. Der Differenzempfänger 46 macht aus einem an seinem Eingang anstehenden Differenzstromsignal ein TTL-Signal. Die Signalinformation steckt hier also in der Stromrichtung. Umgekehrt steuert ein TTL-Signal am Sender 45, sofern er aktiviert ist, die Stromrichtung in der angeschlossenen Leitung.

Anstelle der Elektronik 49 könnte jedoch auch ein Mikroprozessor verwendet werden, der das Signal empfängt, auffrischt und weitersendet. Hierbei ist jedoch der Zeitverzug zwischen dem Senden und Empfangen nachteilig. Gerade diesen Zeitverzug kann man mit Hilfe des beschriebenen Schnittstellenbausteins 1 durch direkte Durchschaltung vermeiden. Die Elektronik 49 liefert auch einen direkten Teilnehmeranschluß 59, der wahlweise belegt werden kann. Über die Schnittstelle 60 kann der Schnittstellenbaustein 1 auf einfache Weise spannungsmäßig versorgt werden.

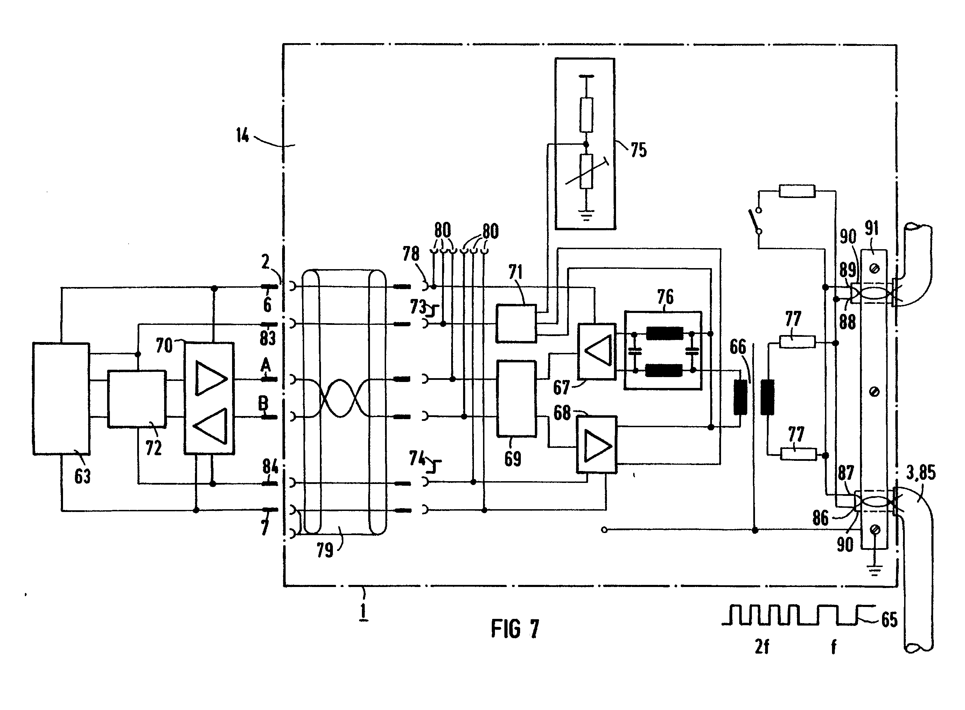

FIG 7 zeigt eine weitere Ausführungsform eines Schnittstellenbausteins 1, der zur Verbindung zwischen einer Busschnittstelle 2 eines Teilnehmers 63 eines Kommunikationssystems und einem Zweidraht-Linien-Bus 3 dient. Zur Busschnittstelle 2 gehören wiederum sechs Schnittstellenanschlüsse A, B, 6, 7, 83 und 84, die mit Ausnahme des Schnittstellenanschlusses 83 an einen Differenzverstärker 10 geschaltet sind und über die der Signalaustausch mit einem Teilnehmer 63, z.B. einem Mikroprozessor, erfolgt. Zwischen diesem und dem Differenzverstärker 70 ist ein anwenderspezifischer Schaltkreis 72 angeschlossen, der zur Nodulation und Demodulation der auf dem Zweidraht-Linien-Bus 3 übertragenen Signale eingesetzt ist. Der Schnittstellenanschluß 6 dient zur Spannungsversorgung des Schnittstellenbausteins 1, während über den Schnittstellenanschluß 7 eine Masseverbindung herstellbar ist. Die beiden anderen Schnittstellenanschlüsse 83, 84 dienen einerseits zur Übertragung eines Sperrsignals 73, welches einen zu unterdrückenden Ruhestand auf dem Zweidraht-Linien-Bus 3 anzeigt und andererseits zur Übertragung eines Freigabesignals 74, durch welches das Senden der Signale vom Teilnehmer 63 eingeleitet wird.

Der Zweidraht-Linien-Bus 3 ist durch ein geschirmtes, zweiadriges Kabel 85 realisiert, welches zum Anschluß an den Schnittstellenbaustein 1 aufgetrennt ist. Die vier Adern des Kabels sind an vier Anschlußklemmen 86, 87, 88, 89 des Schnittstellenbausteins 1 geklemmt. Die beiden Schirme 90 des Kabels 85 sind zur Entstörung an eine Masseanschlußklemme 91 angeschlossen. Die Anschlußklemmen 86, 88 einerseits und 87, 89 andererseits sind elektrisch miteinander verbunden, wobei zwischen beiden Verbindungspunkten über ohmsche Widerstände 77 die eine Wicklung eines Transformators 66 liegt, dessen andere Wicklung mit einem Sender 68, einem Empfänger 67 und einem Komparator 71 in Verbindung steht. Vor dem Eingang des Empfängers 67 ist zur Unterdrückung von Störsignalen ein mehrstufiges Filter 76 geschaltet. An dem Empfänger 67 und dem Sender 68 ist außerdem ein Differenzverstärker 69 angeschlossen, der andererseits über zwei zur eigentlichen Signalübertragung dienende Leitungen mit zwei Anschlußeinheiten 78, 80 verbunden ist. Ein weiteres geschirmtes Kabel 79 überbrückt die Anschlußklemmen der Anschlußeinheit 78 und der Busschnittstelle 2.

Der anwenderspezifische Schaltkreis 72 setzt die vom Mikroprozessor 63, z.B. in Form eines TTL-Signals gelieferten Informationen in frequenzmodulierte Signale um. Nachdem der anwenderspezifische Schaltkreis 72 dem Sender 68 über den Schnittstellenanschluß 84 ein Freigabesignal 74 gesendet hat, werden die modulierten Signale 65 vom Sender 68 über den Transformator 66 zum Zweidraht-Linien-Bus 3 übertragen. Dabei kann das frequenz modulierte Signal 65 z.B. ein aus Signalabschnitten mit einer Grundfrequenz $f$ und solchen mit doppelter Grundfrequenz $2f$ zusammengesetztes Signal sein, das jedoch gleichstromfrei sein muß, damit der Transformator 66 nicht gesättigt wird. Beispielsweise kann hierbei für den Signalzustand 1 sowie den Ruhezustand die Grundfrequenz $f$ festgelegt sein. Die durch den Transformator 66 zu übertragenden Signale 5 können eine Spannungshöhe in der Größenordnung von 100 mV aufweisen.

Zwischen dem anwenderspezifischen Schaltkreis 72 und dem Sender 68 erfolgt jedoch durch Differenzverstärker 69, 70 zunächst eine Umwandlung in ein Differenzsignal, das in ein moduliertes Signal 65 zurückgewandelt und als solches dem Sender 68 zugeführt wird.

Die vom Zweidraht-Linien-Bus 3 an den Teilnehmer 63 über den Schnittstellenbaustein 1 weitergeleiteten modulierten Signale 65 passieren nach Übertragung durch den Transformator 66 zunächst zur Unterdrückung von Störsignalen ein mehrstufiges Filter 76, bevor sie den Empfänger 67 erreichen und nach diesem nach Zwischenwandlung durch die beiden Differenzverstärker 69, 70 in ein Differenzsignal wieder als moduliertes Signal zum anwenderspezifischen Schaltkreis 72 gelangen. Hier werden die modulierten Signale 65 zur Weiterverarbeitung beim Teilnehmer 63 demoduliert.

Mittels eines Komparators 71, der die modulierten, hinter dem Transformator 66 anstehenden Signale 65 mit einer einstellbaren Spannung einer Spannungsquelle 75 vergleicht, können als Grundrauschen einzustufende Signale einer Auswertung entzogen werden, wofür der Komparator 71 bei Unterschreiten des eingestellten Spannungspegels über den Schnittstellenanschluß 83 ein Sperrsignal 73 an den anwenderspezifischen Schaltkreis 72 sendet.

Dadurch, daß die Busschnittstelle 2 normierte Schnittstellenanschlüsse aufweist, ist durch den zuvor beschriebenen Schnitt stellenbaustein 1 ein vielfach zu verwendendes Koppelglied bereitgestellt, das in seiner Handhabung anwenderfreundlich ist, eine galvanische Trennung bietet und zudem eine Kommunikation über lange Leitungslängen bei hohen Datenübertragungsgeschwin digkeiten ermöglicht. Als besonders vorteilhaft erweist sich außerdem die durch den Schnittstellenbaustein 1 gegebene Rückwirkungsfreiheit, z.B. bei Kurzschlüssen.

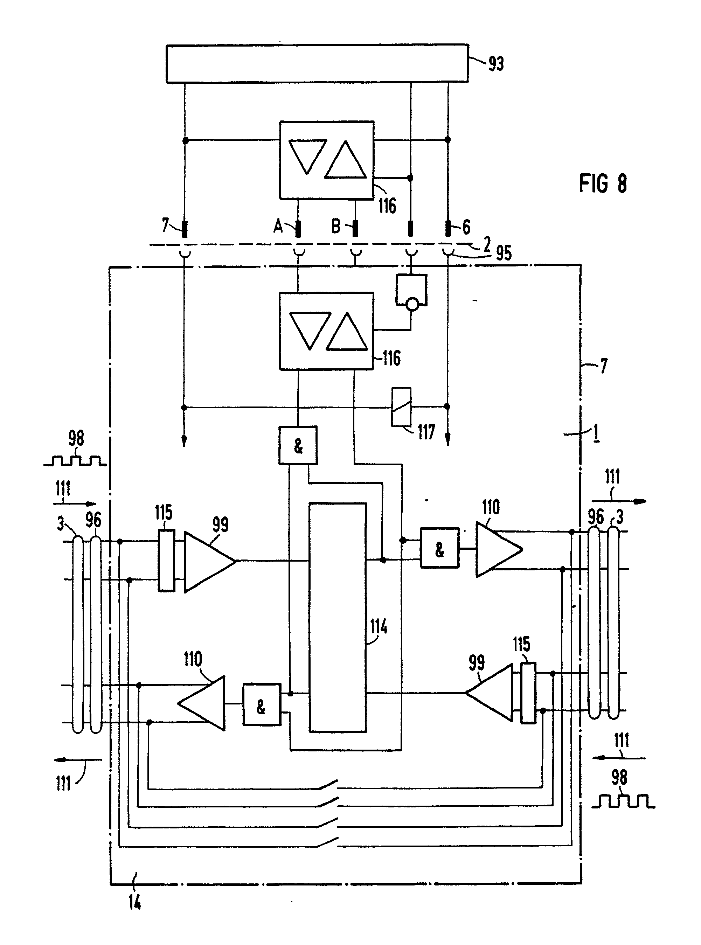

FIG 8 zeigt die Anbindung eines Teilnehmers 93 mit einer Schnittstelle 2 über einen Schnittstellenbaustein 1 an einen als Vierdrahtsystem 3 ausgeführten Bus. Die Schnittstelle 2 ist auch im vorliegenden Fall eine normierte Busschnittstelle, die neben Schnittstellenanschlüssen A, B zur Übergabe eines Differenzsignals außerdem einen dritten Schnittstellenanschluß 6 zur Spannungsversorgung sowie einen vierten Schnittstellenanschluß 7 zur Masseverbindung aufweist. Der Anschluß des Schnittstellenbausteins 1 an den Teilnehmer 93 erfolgt über eine erste Anschlußeinheit 95. Eine zweite Anschlußeinheit 96 ist zum Anschluß an den Bus 3 vorgesehen. Zur Weiterleitung von Übertragungssignalen 98 über den Bus 3 sowie zur Kommunikation des Teilnehmers 93 über den Schnittstellenbaustein 1 mit weiteren Teilnehmern dient eine in einem Gehäuse 8 befindliche elektrische Schaltung 14, die jedoch alternativ auch teilweise außerhalb angeordnet sein kann. Für jede der beiden Übertragungsrichtungen 111 auf dem Bus 3 weist die elektrische Schaltung 14 als erste Mittel eine Reihenschaltung aus einem Empfänger 99 und einem Sender 110 auf, mit der nach Empfang der Übertragungssignale 98 deren Amplitude wieder aufgefrischt, d.h. auf den Sollwert verstärkt wird. Zwischen den Empfänger 99 und den Sender 110 ist eine Elektronik geschaltet, die mit Hilfe von zweiten Mitteln 114 eine Phasenkorrektur der verzerrten Pulse des Übertragungssignals 98 vornimmt. Dritte Mittel 115 werden bei bestimmten Störfällen wirksam.

Bleibt der Empfang von Übertragungssignalen 98 aus oder fällt die Versorgungsspannung des Schnittstellenbausteins 1 aus, so stellen dies Störfälle dar, die den Bus 3 in einen undefinierten Zustand versetzen, der sich über die gesamte Buslänge fortpflanzt. Um dies zu vermeiden, ist ein Abschluß erforderlich, der automatisch mit Eintritt der genannten Störfälle wirksam wird. Dies wird bei der vorliegenden Ausführungsform durch Empfang mit einem Optokoppler 115 erreicht. Bei Spannungsaus fall werden durch Eingreifen eines Relais 117 die vier Adern des Vierdrahtsystems 3 entsprechend verbunden.

Über einen zur elektrischen Schaltung im Gehäuse 8 zugehörigen Treiberbaustein 116, der zur Anpassung an die normierte Schnittstelle 2, z.B. zwecks Umwandlung des Übertragungssignals 98 in ein äquivalentes Differenzsignal dient, erfolgt die Kommunikation des am Schnittstellenbaustein 1 angeschlossenen Teilnehmers 93 mit anderen Teilnehmern an den Bus 3.

Der vorangehend beschriebene Schnittstellenbaustein 1 ermöglicht aufgrund seiner dargestellten Merkmale nicht nur eine einfache, konstruktive Anbindung des Teilnehmers 93 an den Bus 3, sondern auch eine Kommunikation mit hohen Datenübertragungsgeschwindigkeiten, eine große Teilnehmeranzahl sowie große Buslängen. Hierzu ist hervorzuheben, daß der Schnittstellenbaustein 1 alle diese positiven Merkmale in sich vereint.

## Ansprüche

1. Schnittstellenbaustein (1) als Bindeglied zwischen einer Busschnittstelle (2) eines Teilnehmers eines Kommunikationssystems und einem Bus (3), wobei die Busschnittstelle (2) minbestens zwei Schnittstellenanschlüsse (A, B) zur Übergabe eines Differenzsignals aufweist und mit einem dritten Schnittstellenanschluß (6) zur Spannungsversorgung und mit einem vierten Schnittstellenanschluß (7) zur Masseverbindung versehen ist und wobei der Schnittstellenbaustein (1) als gesonderte Einheit eine den jeweiligen Anforderungen an die Busphysik angepaßte, elektrische Schaltung (14) aufweist.

2. Schnittstellenbaustein nach Anspruch 1, **dadurch gekennzeichnet,** daß der Bus als Zweidraht-Linien-Bus (3) ausgeführt ist und die elektrische Schaltung (14) eine außerhalb der als Gehäuse (8) ausgeführten Einheit liegende Masseanschlußklemme (11) vier Anschlüsse (A1, A2, B1, B2) zum Anschluß des durch ein geschirmtes Kabel (17) realisierten Zweidraht-Linien-Busses aufweist und mit ersten Mitteln (26) zur Einstellung der Ruhelage des Zweidraht-Linien-Busses und mit zweiten Nitteln (26) zum Abschluß des Zweidraht-LinienBusses (3) sowie mit einem mehrdrahtigen Kabel (9) versehen ist, wobei der erste (A1) und der zweite (A2) der vier Anschlüsse einerseits und der dritte (B1) und der vierte (B2) der vier Anschlüsse andererseits elektrisch miteinander verbunden sind und eine elektrische Verbindung zwischen dem ersten (A1) der vier Anschlüsse und einer ersten Ader (12) des mehradrigen Kabels (9) sowie dem dritten (81) der vier Anschlüsse und einer zweiten Ader (13) des mehradrigen Kabels (9) besteht.

3. Schnittstellenbaustein nach Anspruch 1, **dadurch gekennzeichnet,** daß die elektrische Schaltung (14) der Einheit (8) mindestens einen ersten (43) und einen zweiten (44) Treiberbaustein aufweist, die jeweils mit einem Sender (45) und einem Empfänger (46) versehen sind, an die jeweils über einen Ein- (51) und einen Ausgang (52) ein als externe Leitung (47) ausgeführter Bus von außen angeschlossen ist und daß in der Schaltung (14) eine Elektronik (49) mit einem elektronischen Schalter (48) vorgesehen ist, mit der signalabhängig ein Signal (50) am Eingang (51) des Empfängers (46) durch Schließen des elektronischen Schalters (48) an den Sender (45) des nachfolgenden Treiberbausteins (43 oder 44) zur Weiterleitung durchschaltbar ist, wobei das am Ausgang (52) des Senders (45) anstehende Signal (53) gegenüber dem am Eingang (SI) des Empfängers (46) anstehenden Signal (50) aufgefrischt ist.

4. Schnittstellenbaustein nach Anspruch 1, **durch gekennzeichnet,** daß der Bus als Zweidraht-Linien-Bus (3) ausgeführt ist, auf dem modulierte erste Signale (65) übertragen werden, wobei der Schnittstellenbaustein (1) ausgehend von seiner Anschlußseite zum Zweidraht-Linien-Bus (3) hin einen Transformator (66) und dazu in Reihe eine Parallelschaltung aus einem Empfänger (67) und einem Sender (68) sowie einem ersten Differenzverstärker (69) aufweist, der mit einem zweiten Differenzverstärker (70) zusammenarbeitet und weiterhin im Schnittstellenbaustein (1) erste Mittel (71, 75) vorgesehen sind, die abhängig vom Pegel der ersten Signale (65) einem zur Modulation und Demodulation der ersten Signale 2S (65) verwendeten anwenderspezifischen Schaltkreis (72) ein Sperrsignal (73) senden, wobei der anwenderspezifische Schaltkreis (72) dem Sender (68) ein Freigabesignal (74) zur Freigabe der zu sendenden ersten Signale (65) sendet.

5. Schnittstellenbaustein nach Anspruch 1, **durch gekennzeichnet,** daß die elektrische Schaltung (14) vom Bus (3) empfangene Übertragungssignale (98), welche mit konstanter Frequenz wiederkehrende Flanken haben, auffrischt und nach Auffrischung an weitere Teilnehmer des Busses (3) weitersendet.

6. Schnittstellenbaustein nach Anspruch 5, **dadurch gekennzeichnet,** daß der Bus als Vierdrahtsystem (3) ausgeführt ist.

7. Schnittstellenbaustein nach Anspruch 5 oder 6, **dadurch gekennzeichnet,** daß erste (99, 100) und zweite (114) Mittel zur Auffrischung der Amplitude und der Phase der Übertragungssignale (98) vorgesehen sind.

8. Schnittstellenbaustein nach Anspruch 7, **dadurch gekennzeichnet,** daß für jede Übertragungsrichtung (111) des Übertragungssignals (98) in der Schaltung jeweils eine Reihenschaltung aus einem Empfänger (99) und einem verstärkendem Sender (110) vorgesehen ist.

9. Schnittstellenbaustein nach Anspruch 8, **dadurch gekennzeichnet,** daß die elektrische Schaltung (14) zweite Mittel (114) aufweist, mit denen die Pulse des Übertragungssignals (98) in der Phase aufgefrischt werden, bevor diese an den Sender (110) weitergeleitet werden.

FIG 1

FIG 2

FIG 3

FIG 4

FIG 5

EP 0 419 713 A1

FIG 6

FIG 7

FIG 8

## )) Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | ELEKTRONIK. vol. 36, no. 13, 26 Juni 1987, MUNCHEN DE Seiten 86 - 94; A. Djenguerian: "PRAKTISCHER AUFBAU EINES ETHERNET-/CHEAPERNET-ANSCHLUSSKNOTENS" * Seite 88, linke Spalte, Zeilen 1 - 5 * * Seite 89, linke Spalte, Zeilen 4 - 22 * * Seite 92, rechte Spalte, Zeile 38 - Seite 94, linke Spalte, Zeile 29; Figuren 1, 3, 6-10 * | 1 | H04L12/40 |
| Y A | | 3, 5 2 | |
| Y | GB-A-2185666 (GENERAL ELECTRIC COMPANY) * Seite 1, Zeilen 19 - 22 * * Seite 1, Zeilen 60 - 105 * * Seite 1, Zeile 119 - Seite 2, Zeile 78; Figuren 1, 2 * | 3, 5 | |
| A | | 8 | |
| D,A | ELEKTRONIK. vol. 35, no. 19, 19 September 1986, MUNCHEN DE Seiten 146 - 154; R. WILSON: "HOCHLEISTUNGSNETZE FUER PERIPHERIEGERAETE Aufbau von SCSI- und IPI-Schnittstellen mit RS-485 transceivern " * das ganze Dokument * | 1 | RECHERCHIERTE SACHGEBIETE (Int. Cl.5 ) H04L H01R |
| A | ELEKTRONIK. vol. 33, no. 12, 15 Juni 1984, MUNCHEN DE Seiten 97 - 98; H. ABENDROTH: "BUSFAEHIGE SCHNITTSTELLE NACH RS485/422" * Seite 97, linke Spalte, Zeile 15 - rechte Spalte, Zeile 8 * * Seite 98, linke Spalte, Zeilen 9 - 18; Figur 2 * | 1, 4, 6 | |

-/--

Der vorliegende Recherchenbericht wurde für alle Patentansprüche erstellt

| Recherchenort | Abschlußdatum der Recherche | Prüfer |
|---|---|---|
| DEN HAAG | 07 JUNI 1990 | STAESSEN B.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, übereinstimmendes Dokument

EPO FORM 1503 03.82 (P0403)

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | NEW ELECTRONICS. INCORPORATING ELECTRONICS TODAY. vol. 20, no. 18, 15 September 1987, LONDON GB Seiten 21 - 23; A. DENCH: "COMPONENTS & DESIGN_TECHNIQUES FOR MIL-STD-1553B IMPLEMENTATION" * Seite 21, linke Spalte, Zeile 22 - rechte Spalte, Zeile 14 *  ----- | 4 | |

RECHERCHIERTE
SACHGEBIETE (Int. Cl.5 )

Der vorliegende Recherchenbericht wurde für alle Patentansprüche erstellt

| Recherchenort | Abschlußdatum der Recherche | Prüfer |
|---|---|---|
| DEN HAAG | 07 JUNI 1990 | STAESSEN B.F. |

EPO FORM 1503 03.82 (P0403)